# EUROPEAN PATENT SPECIFICATION

(11) **EP 0 379 352 B1**
(45) Date of publication and mention of the grant of the patent: **29.12.1993**
(21) Application number: 90300479.4
(22) Date of filing: 17.01.1990
(51) Int. Cl.: B60T 13/14

(54) **Improvements in hydraulic boosters for vehicles**
Hydraulischer Kraftverstärker für Fahrzeuge
Amplificateur hydraulique pour véhicules

(30) Priority: 20.01.1989 GB 8901302
(43) Date of publication of application: 25.07.1990
(73) Proprietor: LUCAS INDUSTRIES public limited company, Birmingham, B19 2XF West Midlands (GB)
(72) Inventor: Price, Anthony George, Cwmbran, Wales NP44 2EY (GB); Williamson, Michael, Bridgend, Glamorgan, Wales (GB); Taylor, Michael Anthony, Gwent, Wales, NP7 0AS (GB)
(74) Representative: Makovski, Priscilla Mary

(56) References cited:
- FR-A- 2 476 573
- GB-A- 1 307 612
- GB-A- 2 121 900

## Description

This invention relates to an hydraulic booster for a vehicle hydraulic system, of the kind comprising a housing provided with a bore, an inlet for connection to a source of hydraulic pressure, an outlet for connection to a reservoir for fluid, an input member and a boost piston working in the bore, the boost piston being advanced in the bore in response to pressurisation of a boost chamber by fluid from the source, a connection between the boost chamber and the outlet, with pressurisation of the boost chamber being controlled by control valve means operable in response to an input load applied to the input member, the control valve means having normally closed inlet valve means controlling communication between the inlet and the boost chamber, and variable restriction means operated by relative movement of the boost piston and the input member to control fluid flow from the boost chamber to the outlet through the connection.

A booster of the kind set forth is shown in GB 2 121 900A, which is of the closed centre type when it is inoperative, but operates in an open centre mode. This is achieved by providing two connections between the boost chamber and the pressure source, both of which are closed by the inlet valve means when the booster is inoperative, so that the booster can be considered to be closed centre. The inlet valve means operates to open the first connection on initial movement of the input member, and the second on movement of the boost piston. One connection is always open, so that the booster operates in an open centre mode, with the variable restriction means controlling flow to the outlet. This construction has the advantage, in comparison with a normal closed centre booster, that it minimises the length of the booster because of the two connections, and in comparison with an open centre booster, that it does not require continuous circulation of fluid from the source. It has the disadvantage that it is relatively expensive to manufacture, as it requires two inlets in the housing, which involve cross-drillings, and spool valve portions of the input member and the bore, to provide the inlet valve means for the first connection, and these require precision manufacture.

According to the present invention, in an hydraulic booster of the kind set forth the inlet valve means comprises a single valve operated by movement of the boost piston in response to movement of the input member, and the boost piston includes passage means connecting the boost chamber to a chamber forward of the boost piston and a one-way valve means to allow fluid to flow through the passage means from the forward chamber to the boost chamber, on initial movement of the boost piston before the inlet valve opens.

The provision of one inlet valve means and thus one inlet instead of two means that the booster is less expensive to manufacture. Where a single inlet valve is provided and is operated by movement of the boost piston, the start of servo assistance is delayed and there is little feel initially for the operator, in comparison with when the valve is operated by the input member. The fluid flow from the forward chamber to the boost piston on initial movement of the boost piston fills the void in the boost chamber which is created as the boost piston moves forward, and results firstly in a smooth initiation of servo assistance when the fluid from the inlet flows into the boost chamber on opening of the inlet valve, and secondly in the provision of some feel for the operator. The flow of fluid from the forward chamber also helps to reduce the undesirable pressure generated in the forward chamber as the boost piston moves forward, so that the response of the booster is improved. This is particularly advantageous when the viscosity of the fluid is high, for example, at low temperatures.

The single inlet valve means may be provided by spool valve portions on the bore and the boost piston. Preferably however the inlet valve means comprises first sealing means on the boost piston cooperating with the single inlet. This arrangement removes the need for the spool valve portions, enabling the bore and the boost piston to be made to normal hydraulic tolerances, and so further reducing the cost of manufacturing the booster. The boost piston also has second sealing means between the inlet and the outlet; the second sealing means may prevent fluid flow from the inlet to the outlet, or have a leak path allowing slight flow, to avoid excessive pressure building up between the sealing means. The first and second sealing means preferably each comprise a ring of polytetrafluoroethylene (PTFE) backed by an O-ring. If the second seal is to allow flow, the leak path is provided by a groove in the PTFE ring. Such seals have low hysteresis, and good resistance to wear, so that the first sealing means, although it passes over the inlet to open and close the inlet valve, will not be easily damaged. The seals also have a tolerance to relatively large radial clearances, without extruding under pressure, and thus allow the tolerances between the boost piston and the bore to be even larger without affecting the operation of the booster.

The passage means in the boost piston preferably comprises a plurality of longitudinal apertures. The one-way valve means may then comprise a disc able to close all the apertures. The disc is preferably housed in a recess in the boost piston, and has a sealing portion adapted to close the apertures, and an apertured portion to allow fluid flow when the one-way valve is open. The disc may float in the recess. This construction of one-way valve means is advantageous as it is relatively inexpensive to provide, but any other suitable alternatives may be used.

Some embodiments of the present invention are shown, by way of example, in the accompanying drawings, of which:
Figure 1 is a longitudinal section through an hydraulic booster for a vehicle hydraulic system; and
Figure 2 is similar to Figure 1, but shows a modified booster.

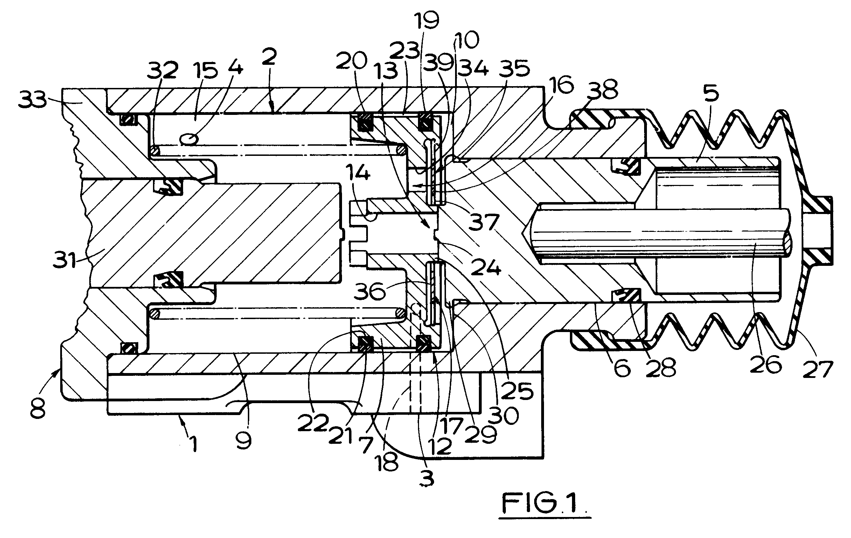

The hydraulic booster shown in Figure 1 comprises a housing 1 provided with a longitudinal stepped bore 2, an inlet 3 for connection to a source of hydraulic pressure, suitably a pump or an accumulator (not shown) and an outlet 4 for connection to a reservoir for fluid (not shown). An input member in the form of a piston 5 works in a smaller diameter portion 6 of the bore 2, and a boost piston 7 for actuating a master cylinder 8 (only part of which is shown) works in a larger diameter portion 9 of the bore 2. The boost piston 7 is advanced in the bore portion 9 in response to pressurisation of a boost chamber 10 by fluid from the source. Pressurisation of the boost chamber 10 is controlled by control valve means 11 operated in response to an input load applied to the input piston 5. The control valve means 11 comprises a single normally-closed inlet valve 12 controlling communication between the inlet 3 and the boost chamber 10, and variable restriction means 13 operated by relative movement of the boost piston 7 and the input piston 5 to control fluid flow from the boost chamber 10 to the outlet 4 via a connection 14 in the boost piston 7 and a forward chamber 15 defined in the bore portion 9. The boost chamber 10 is also connected to the forward chamber 15 by passage means 16 in the boost piston 7, with one-way valve means 17 allowing fluid flow through the passage means 16 from the forward chamber 15 to the boost chamber 10.

A single inlet passage 18 in the housing 1 leads from the inlet 3 to the bore portion 9. The inlet valve means 12 comprises a first, rearward, seal 19 on the boost piston 7 controlling communication between the passage 18 and the boost chamber 10. The valve 12 is closed when the booster is inoperative, so that the booster is then of the closed centre type, and opens on movement of the boost piston 7. A second, forward seal 20 is also provided on the boost piston 7 between the passage 18 and the outlet 4, and has a leak path (not shown) to allow slight flow of fluid from the passage 18 to the outlet 4. The seals 19,20 each comprise a PTFE sealing ring 21 backed by a rubber O-ring 22, the seal 20 having a groove (not shown) in the PTFE ring 21 to provide the leak path. These seals are particularly suitable for use in high pressure systems, as they have low hysteresis characteristics, and they also have good wear characteristics, so that the first seal 19 will not be readily damaged, even though it passes over the passage 18 to open and close the inlet valve 12. Furthermore, these seals 19,20 also have a tolerance to relatively large radial clearances, without extruding under high pressures. Thus there can be a relatively high diametral clearance, perhaps 0.5mm, between the boost piston 7 and the bore portion 9 without affecting the operation of the seals 19,20. In fact, a high pressure annulus 23 will normally be defined round the boost piston 7 between the seals 19,20, and the leak path in the seal 20 is provided to ensure that the pressure in the annulus 23 does not become excessive, for example due to thermal expansion of the fluid, as this could result in failure of the boost piston 7 to operate properly.

The variable restriction means 13 comprises a forward portion 24 on the input piston 5 cooperating with a seat 25 on the boost piston 7 to restrict flow through the connection 14, which comprises a central through-bore in the piston 7.

The input piston 5 is operated by a pedal (not shown) through a push-rod 26 which is sealed to the housing 1 by a boot 27. The input piston 5 carries a seal 28 and has a shoulder 29 at its forward end which engages with the step 30 between the bore portions 6 and 9 to define its retracted position. The boost piston 7 acts on a master cylinder piston 31 at its forward end. The boost piston 7 and input member 5 are biassed into the retracted positions shown, in which they are in engagement, by a spring 32 which acts between the boost piston 7 and part of the master cylinder housing 33.

The passage means 16 in the boost piston 7 comprises a plurality of circumferentially-spaced longitudinal apertures 34. The one-way valve means 17 has a valve member 35 adapted to control fluid flow through all the apertures 34. The valve member 35 comprises an annulus which floats in a recess 36 formed in the rear of the boost piston 7. The annulus 35 has a central aperture 37 accommodating the seating portion 25 of the boost piston 7, a solid sealing portion 38 adapted to engage with the apertures 34, and a slotted outer portion 39 which allows fluid flow when the valve means 17 is open. The annulus 35 closes the apertures 34 when the pressure in the boost chamber 7 exceeds that in the forward chamber 15, but otherwise allows flow between the chambers.

In the inoperative position shown the inlet valve 12 is closed so that the boost chamber 10 is cut off from the source, but is connected to the outlet 4 through the one-way valve means 17 and the forward chamber 15. The booster, when inoperative, is therefore of the closed centre type.

In operation, a load is applied to the input piston 5 from the pedal. The input piston 5 and the boost piston 7 are advanced together against the force in the spring 32. Initial movement of the boost piston 7 increases the volume of the boost chamber 10, tending to create a void, and also starts to generate pressure in the forward chamber 15. The resulting pressure differential between the chambers causes fluid to flow from the chamber 15 to the chamber 10 through the apertures 34 and past the open valve member 35. The pressure in the forward chamber 15 is reduced, while the void in the boost chamber 10 starts to fill.

Further movement of the boost piston 7 then opens the inlet valve 12, allowing fluid from the inlet 3 into the boost chamber 10, to start to pressurise it. Once the pressure in the boost chamber 10 exceeds that in the forward chamber 15 the one-way valve 17 closes. Pressurisation of the boost chamber 10 advances the boost piston 7 relative to the input piston 5, and the restriction 13 then operates to control flow through the bore 14, controlling the boost pressure in accordance with the input load. The boost piston 7 acts to operate the master cylinder 8. The pressure in the boost chamber 10 also acts on the input piston 5 to provide a reaction, or feel, at the pedal. This reaction starts with the initial fluid flow into the boost chamber 10, and because of the initial flow there is then a smooth transition when the inlet valve 12 opens, with little or no "kick-back" to the operator.

When the force generated by the boost pressure acting on the input piston 5 equals the applied load, the input and boost pistons separate slightly and the booster is then in its balanced position.

When the input load is reduced, the boost pressure acts to move the input piston 5 rearwardly, opening the restriction 13 to allow more fluid flow through the bore 14 to reduce the boost pressure. The boost piston 7 is then moved rearwardly by the spring 32 and the reaction from the master cylinder 8. If the input load is not removed altogether, the booster adopts a new balanced position, otherwise the parts return to the retracted position shown.

It will be noted that in operation the booster acts as an open centre type booster, due to the continuous flow of fluid from the inlet 3 to the outlet 4. The booster may be used in a twin master cylinder and booster assembly as part of the hydraulic braking system for an agricultural vehicle.

The booster shown overcomes the various disadvantages that arise when the inlet valve is operated by the boost piston 7 rather than the input piston 5. Normally in this situation servo assistance tends to be initiated relatively slowly, so on initial operation of the booster there is a lack of response, and feel for the operator. With this booster, firstly there is no lost-motion between the input and boost pistons on initial operation, so that the delay in initiating servo assistance is minimised. Furthermore, the reduction in pressure in the forward chamber 15 because of the fluid flow to the boost chamber 10 improves the response of the booster, and this fluid flow also improves the feel for the operator.

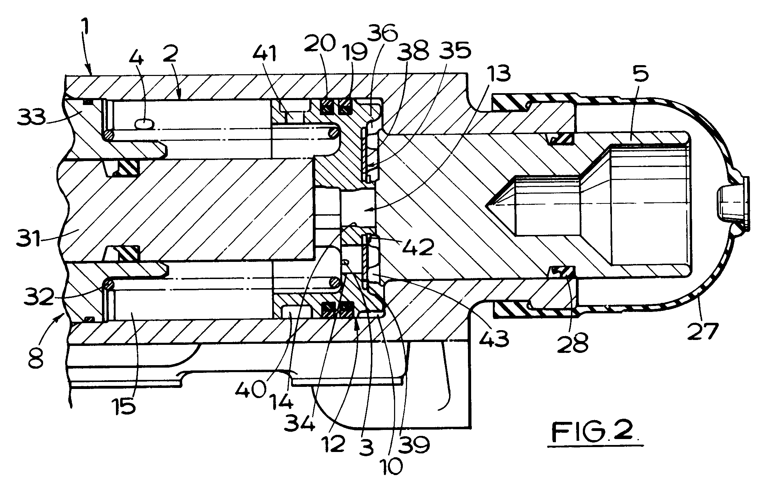

Figure 2 shows a modified version of the booster of Figure 1, and corresponding reference numerals have been applied to corresponding parts. In Figure 2 the length of the boost piston 7 is increased to provide an improved bearing surface. The forward seal 20 is located adjacent the rearward seal 19, rather than at the forward end of the boost piston 7, which is instead provided with an annulus 40 and a radial passage 41, to ensure that the reservoir port 4 remains in communication with the forward chamber 15 when the boost piston 7 is at maximum stroke. The annulus 23 is omitted, but the groove is still provided in the PTFE ring 21 of the forward seal 20, to ensure there is no pressure build-up between the seals.

The arrangement of the recess 36 for the valve member 35 is also modified. For ease of manufacture, a circlip 42 round the seat portion 25, rather than the inwardly-extending shoulder on the boost piston, defines the rearward stop for the valve member 35. The input piston 5 is also provided with forwardly extending projections 43 which act to break up the fluid flowing into the boost chamber 10 from the inlet, to ensure that the boost piston 7 does not stick in the bore.

The remainder of the construction, and the operation of the booster of Figure 2 are the same as that of Figure 1. The modifications of Figure 2 facilitate manufacture, and improve operation.

In a further modification, not shown, the passage means 16 and one-way valve means 17 may be of any other suitable type. In yet another modification, not shown, the single inlet valve means 12 may be provided by spool valve portions on the bore 2 and boost piston 7, but this tends to increase the cost of manufacturing the booster.

## Claims

1. An hydraulic booster for a vehicle hydraulic system, comprising a housing (1) provided with a bore (2), an inlet (3) for connection to a source of hydraulic pressure, an outlet (4) for connection to a reservoir for fluid, an input member (5) and a boost piston (7) working in the bore (2), the boost piston (7) being advanced in the bore (2) in response to pressurisation of a boost chamber (10) by fluid from the source, a connection (14,15) between the boost chamber and the outlet (4), with pressurisation of the boost chamber (10) being controlled by control valve means (11) operable in response to an input load applied to the input member (5), the control valve means (11) having normally closed inlet valve means (12) controlling communication between the inlet (3) and the boost chamber (10), and variable restriction means (13) operated by relative movement of the boost piston (7) and the input member (5) to control fluid flow from the boost chamber (10) to the outlet (4) through the connection (14,15), characterised in that the inlet valve means comprises a single valve (12) operated by movement of the boost piston (7) in response to movement of the input member (5), and the boost piston (7) includes passage means (16) connecting the boost chamber (10) to a chamber (15) forward of the boost piston (7), and a one-way valve means (17) to allow fluid to flow through the passage means (16) from the forward chamber (15) to the boost chamber (10), on initial movement of the boost piston (7) before the inlet valve (12) opens.

2. An hydraulic booster as claimed in Claim 1, in which the single inlet valve (12) is provided by spool valve portions on the bore (2) and the boost piston (7).

3. An hydraulic booster as claimed in Claim 1, in which the single inlet valve (12) comprises sealing means (19) on the boost piston (7) co-operating with the inlet (3).

4. An hydraulic booster as claimed in Claim 3, in which a second sealing means (20) is provided on the boost piston (7) to prevent flow from the inlet (3) to the outlet (4).

5. An hydraulic booster as claimed in Claim 3, in which a second sealing means (20) is provided on the boost piston (7), the sealing means (20) having a leak path to allow slight fluid flow from the inlet (3) to the outlet (4).

6. An hydraulic booster as claimed in any preceding claim, in which the passage means (16) in the boost piston (7) comprises a plurality of longitudinal apertures (34).

7. An hydraulic booster as claimed in Claim 6, in which the one-way valve means (17) comprises a disc (35) adapted to close all the apertures (34).

8. An hydraulic booster as claimed in Claim 7, in which the disc (35) is housed in a recess (36) in the boost piston (7), and has a sealing portion (38) adapted to close the apertures (34), and an apertured portion (39) to allow fluid flow when the one-way valve means (17) is open.

## Patentansprüche

1. Hydraulischer Kraftverstärker für eine Hydraulikanlage in Fahrzeugen, mit einem Gehäuse (1), das eine Bohrung (2), einen an eine Quelle hydraulischen Druckes anschließbaren Einlaß (3), einen an einen Flüssigkeitsbehälter anschließbaren Auslaß (4), ein Eingabeglied (5) und einen in der Bohrung (2) arbeitenden Verstärkerkolben (7) aufweist, der in der Bohrung (2) bei Unterdrucksetzung einer Verstärkerkammer (10) durch Flüssigkeit von der Quelle verschiebbar ist, wobei eine Verbindung (14, 15) zwischen der Verstärkerkammer und dem Auslaß (4) bei Unterdrucksetzung der Verstärkerkammer (10) von einer Steuerventilanordnung (11) gesteuert wird, welche abhängig von einer auf das Eingabeglied (5) aufgebrachten Eingabekraft betätigbar ist und eine normalerweise geschlossene Einlaßventilanordnung (12) aufweist, welche die Verbindung zwischen dem Einlaß (3) und der Verstärkerkammer (10) steuert, sowie eine veränderbare Drosselstelle (13), die durch eine Relativbewegung des Verstärkerkolbens (7) in Bezug auf das Eingabeglied (5) betätigt wird, um den Flüssigkeitsstrom von der Verstärkerkammer (10) zum Auslaß (4) durch die Verbindung (14, 15) zu steuern, dadurch gekennzeichnet, daß die Einlaßventilanordnung ein einzelnes Ventil (12) aufweist, das durch eine von einer Bewegung des Eingabegliedes (5) ausgelöste Bewegung des Verstärkerkolbens (7) betätigt wird, und der Verstärkerkolben (7) einen die Verstärkerkammer (10) mit einer Kammer (15) vor dem Verstärkerkolben (7) verbindenden Durchlaß (16) sowie eine Einwegventilanordnung (17) aufweist, die eine Flüssigkeitsströmung von der vorderen Kammer (15) durch den Durchlaß (16) hindurch zur Verstärkerkammer (10) bei einer anfänglichen Bewegung des Verstärkerkolbens (7) vor dem Öffnen des Einlaßventils (12) ermöglicht.

2. Hydraulischer Kraftverstärker nach Anspruch 1, bei dem das einzelne Einlaßventil (12) von Spindelventilabschnitten in der Bohrung (2) und am Verstärkerkolben (7) gebildet ist.

3. Hydraulischer Kraftverstärker nach Anspruch 1, bei dem das einzelne Einlaßventil (12) eine mit dem Einlaß (3) zusammenwirkende Dichtungsanordnung (19) am Verstärkerkolben (7) aufweist.

4. Hydraulischer Kraftverstärker nach Anspruch 3, bei dem am Verstärkerkolben (7) eine zweite Dichtungsanordnung (20) vorgesehen ist, um eine Strömung vom Einlaß (3) zum Auslaß (4) zu verhindern.

5. Hydraulischer Kraftverstärker nach Anspruch 3, bei dem am Verstärkerkolben (7) eine zweite Dichtungsanordnung (20) vorgesehen ist, welche einen Leckströmungspfad aufweist, um eine geringe Flüssigkeitsströmung vom Einlaß (3) zum Auslaß (4) zu ermöglichen.

6. Hydraulischer Kraftverstärker nach einem beliebigen der vorangehenden Ansprüche, bei dem der Durchlaß (16) im Verstärkerkolben (7) eine Mehrzahl von Längsöffnungen (34) aufweist.

7. Hydraulischer Kraftverstärker nach Anspruch 6, bei dem die Einwegventilanordnung (17) eine Scheibe (35) aufweist, die imstande ist, alle Öffnungen (34) zu verschließen.

8. Hydraulischer Kraftverstärker nach Anspruch 7, bei dem die Scheibe (35) in einer Aussparung (36) des Kraftverstärkerkolbens (7) aufgenommen ist und einen zum Verschließen der Öffnungen (34) geeigneten Dichtungsabschnitt (38) sowie einen mit Öffnungen versehenen Abschnitt (39) aufweist, um eine Flüssigkeitsströmung zu ermöglichen, wenn die Einwegventilanordnung (17) offen ist.

## Revendications

1. Amplificateur hydraulique pour un système hydraulique de véhicule, comprenant un boîtier (1) muni d'un alésage (2), une entrée (3) pour raccordement à une source de pression hydraulique, une sortie (4) pour raccordement à un réservoir pour fluide, un élément d'entrée (5) et un piston d'amplificateur (7) agissant dans l'alésage (2), le piston d'amplificateur (7) étant avancé dans l'alésage (2) en réponse à la mise en pression d'une chambre d'amplificateur (10) par un fluide issu de la source, un raccordement (14, 15) entre la chambre d'amplificateur et la sortie (4), avec mise en pression de la chambre d'amplificateur (10) étant commandée par le moyen de vanne de commande (11) mis en oeuvre en réponse à une charge d'entrée appliquée à l'élément d'entrée (5), le moyen de vanne de commande (11) ayant un moyen de vanne d'entrée normalement fermé (12) commandant la communication entre l'entrée (3) et la chambre d'amplificateur (10), et un moyen de restriction variable (13) mis en oeuvre par un déplacement relatif du piston d'amplificateur (7) et de l'élément d'entrée (5) pour commander l'écoulement de fluide de la chambre d'amplificateur (10) vers la sortie (4) à travers le raccordement (14, 15) caractérisé en ce que le moyen de vanne d'entrée comprend une vanne unique (12) mise en oeuvre par le déplacement du piston d'amplificateur (7) en réponse au déplacement de l'élément d'entrée (5), et le piston d'amplificateur (7) comprend un moyen de passage (16) raccordant la chambre d'amplificateur (10) à une chambre (15) en avant du piston d'amplificateur (7), et un moyen de vanne à une voie (17) pour permettre au fluide de s'écouler à travers le moyen de passage (16) de la chambre avant (15) vers la chambre d'amplificateur (10), sur le déplacement initial du piston d'amplificateur (7) avant que la vanne d'entrée (12) s'ouvre.

2. Amplificateur hydraulique selon la revendication 1, dans lequel la vanne d'entrée unique (12) comprend des parties de distributeur à tiroir cylindrique sur l'alésage (2) sur le piston d'amplificateur (7).

3. Amplificateur hydraulique selon la revendication 1, dans lequel la vanne d'entrée unique (12) comprend un moyen d'étanchéïté (19) sur le piston d'amplificateur (7) coopérant avec l'entrée (3).

4. Amplificateur hydraulique selon la revendication 3, dans lequel un second moyen d'étanchéïté (20) est situé sur le piston d'amplificateur (7) pour empêcher un écoulement de l'entrée (3) vers la sortie (4).

5. Amplificateur hydraulique selon la revendication 3, dans lequel un second moyen d'étanchéïté (20) est situé sur le piston d'amplificateur (7), le moyen d'étanchéïté (20) ayant un passage de fuite pour permettre un léger écoulement de fluide de l'entrée (3) vers la sortie (4).

6. Amplificateur hydraulique selon l'une quelconque des revendications précédentes, dans lequel le moyen de passage (16) dans le piston d'amplificateur (7) comprend plusieurs ouvertures longitudinales (34).

7. Amplificateur hydraulique selon la revendication 6, dans lequel le moyen de vanne à une voie (17) comprend un disque (35) conçu pour fermer toutes les ouvertures (34).

8. Amplificateur hydraulique selon la revendication 7, dans lequel le disque (35) est logé dans un creux (36) dans le piston d'alimentation (7), et a une partie d'étanchéïté (38) conçue pour fermer les ouvertures (34), et une partie à trous (39) pour permettre l'écoulement du fluide quand le moyen de vanne à une voie (17) est ouvert.
